Europäisches Patentamt

European Patent Office

Office européen des brevets

(11) Publication number: **0 093 519**
**B2**

(12) **NEW EUROPEAN PATENT SPECIFICATION**

(45) Date of publication of the new patent specification: **31.10.90**

(51) Int. Cl.⁵: **C 01 B 33/34**

(21) Application number: **83302066.2**

(22) Date of filing: **13.04.83**

(54) Method of preparing high silica zeolites with control of zeolite morphology.

(30) Priority: **29.04.82 US 372872**

(43) Date of publication of application:
**09.11.83 Bulletin 83/45**

(45) Publication of the grant of the patent:
**28.08.85 Bulletin 85/35**

(45) Mention of the opposition decision:
**31.10.90 Bulletin 90/44**

(84) Designated Contracting States:
**BE DE FR GB IT NL**

(56) References cited:
**EP-A-0 000 669**
**EP-A-0 014 546**
**EP-A-0 021 674**
**EP-A-0 021 675**
**EP-A-0 026 963**
**EP-A-0 029 962**
**US-A-3 386 801**
**US-A-4 041 135**
**US-A-4 061 724**
**US-A-4 073 865**
**US-A-4 296 083**

(73) Proprietor: **MOBIL OIL CORPORATION**
**150 East 42nd Street**
**New York New York 10017 (US)**

(72) Inventor: **Kuehl, Guenter Hinrich**
**1956 Cardinal Lake Drive**
**Cherry Hill New Jersey 08003 (US)**

(74) Representative: **Colmer, Stephen Gary et al**
**Mobil Court 3 Clements Inn**
**London WC2A 2EB (GB)**

**Description**

This invention is concerned with the crystallization of high silica zeolites and, more particularly, is concerned with the preparation of high silica zeolites having a silica-to-alumina molar ratio greater than 500, up to and approaching infinity, by control of the reaction medium pH so as to obtain zeolitic compositions of a varying morphology depending on the final pH of the reaction medium.

High silica zeolites are extremely well known in the art and have been the subject of much attention in both the patent and technical literature. It has now been discovered that the morphology of the crystals produced from a forming solution varies depending upon the final pH of the reaction medium. As is well known in the art of the synthesis of zeolites, it is extremely difficult to control the pH of the zeolite forming solution and, in fact, it is extremely difficult even to measure the pH during crystallization since crystallization is usually carried out in closed vessels under autogeneous pressure such that exact measurements are not practical. It is known in the art that there is a certain pH range over which ZSM-5 type zeolites can be prepared and, in this connection, U.S. Patent 4,061,724 discloses at column 3 a pH range of 10—14. However, this patent does not teach that the morphology of the resulting crystals is dependent on the pH of the reaction medium. It is also known that the pH is difficult to control and that it varies during the course of crystallization.

It has long been recognized in the synthesis of various crystalline aluminosilicates of the low silica type that complexing agents such as phosphates, arsenates, tartrates, citrates, ethylenediaminetetraacetate, etc. also can act as a buffer. The use of these materials has been primarily directed to those situations where it was desired to increase the silica-to-alumina ratio of the zeolite by complexing the alumina. Thus, procedures of this type are disclosed in U.S. Patent 3,886,801 as well as in an article entitled "Influence of Phosphate and other Complexing Agents on the Crystallization of Zeolites", appearing in *Molecular Sieves, Soc. of Chem. Industry,* London, pp. 85, et. seq. (1967).

All of the above three publications have for a common goal the use of a material which complexes the aluminum such that a zeolitic product is obtained which has a higher silica-to-alumina ratio than that which would normally be obtained from the same reaction medium in the absence of such complexing agents. As indicated earlier, certain of the complexing agents are also buffers, but they are used in amounts such that their primary objective is to complex all or a portion of the aluminum, thereby raising the silica-to-alumina ratio of the resulting zeolite. In the above referred to article, as well as in U.S. Patent 3,386,801, low silica zeolites are dealt with such that the complexing agent added does not complex all the aluminum due to equilibrium considerations. On the other hand, U.S. Patent 4,088,605, which is directed towards high silica-to-alumina ratio zeolites, discloses that the function of the complexing agent is indeed to complex substantially all the available aluminum which, of course, also raises the silica-to-alumina ratio of the final crystalline product. References such as U.S. Patent 3,949,059 teach the use of buffers in the crystallization of a low silica zeolite. The novel process of this invention is not concerned with the use of complexing agents which may additionally be buffers in amounts such that they complex with aluminum and raise the silica-to-alumina ratio of the zeolitic product nor is the novel process herein concerned with low silica zeolites. In other words, in the novel process of this invention, a buffer is used in an amount such that the silica-to-alumina ratio of the product is substantially unaffected, i.e., it would have the same high silica-to-alumina ratio whether or not a buffer were used.

It is known from U.S. Patent 4,073,865 that high silica ZSM-5 having a rod-shaped morphology can be produced over a wide initial pH range of 7.4 to 9.5 if the reaction mixture contains a source of fluoride ions, such as ammonium fluoride, in addition to water, silica and a quaternary ammonium ion.

The present invention is based on the discovery that in the absence of flouride ion, the pH of the reaction mixture is of paramount importance in establishing the morphology of high silica ZSM-5.

Accordingly, the invention resides in a process for producing rod-shaped high silica ZSM-5 having a silica-to-alumina molar ratio greater than 500, which process comprises:

A) forming a reaction mixture which is free of deliberately added aluminum and which contains a source of alkali metal oxide, a source of silica, a quaternary ammonium ion, water and a buffer which controls the final pH of the reaction mixture to a value within the range 9.73 to 10.5 and which is selected from phosphate, tartrate, citrate, oxalate, ethylenediaminetetraacetate, and acetate; and

B) holding said mixture at elevated temperature and pressure until said rod-shaped ZSM-5 crystals are formed.

As has heretofore been stated, it is well known in the art that the pH of a reaction mixture in zeolite synthesis cannot be carefully controlled and that pH does vary over fairly wide ranges during the steps of gel preparation, aging, and during the course of crystallization. The novel process of this invention minimizes the variation in pH by using a buffer which would effectively control the pH to any desired value within the ranges above set forth, thereby greatly facilitating the crystallization of a zeolite of a particular morphology.

The buffer utilized in the process of the invention is selected from phosphate, tartrate, citrate, oxolate, ethylenediaminetetraacetate and acetate.

The amount of buffer which is used is determined by many factors, including the particular nature of the buffer itself, as well as the final pH which is desired. In general, though, it can be stated that the buffer has to be used in sufficient amounts such that it does not act as a buffer in order to stabilize the pH.

In general, it can be stated that the amount of buffer used is such that there is present in the reaction medium 0.1 to about 0.35 equivalents of buffer per mol of silica. Greater amounts of buffer can be used, but the increased salt concentration reduces the rate of crystallization. As has heretofore been stated, the novel process of this invention resides in controlling the pH during crystallization of a high silica zeolite. The method used to control the pH is by the use of a buffer. As has also been indicated, it is difficult to measure the pH during crystallization so that a very effective correlation has been made by measuring the final pH, i.e., the pH after crystallization. It is precisely this final pH which has been correlated with the morphology of the high silica zeolites which are produced.

The novel process of this invention is concerned with the synthesis of high silica ZSM-5 and this expression is intended to define a crystalline structure which has a silica-to-alumina molar ratio greater than 500, up to and including those highly siliceous materials where the silica-to-alumina ratio is infinity or as reasonable close to infinity as practically possible.

This latter group of highly siliceous materials is exemplified by U.S. Patents 3,941,871; 4,061,724; 4,073,865; wherein the materials are prepared from reaction solutions which involve no deliberate addition of aluminum. However, trace quantities of aluminum are usually present due to the impurity of the reactants. It is also to be understood that the expression "high silica-containing zeolite" also specifically includes those materials which have other metals besides silica and/or aluminum associated therewith, such as boron, iron, chromium, etc. U.S. Patent 3,702,886 describes and claims ZSM-5.

As is set forth in the above-identified U.S. Patents, the zeolites of this invention are prepared from a forming solution containing water, a source of quaternary ammonium cations, an alkali metal, silica, with or without added alumina and with or without the presence of additional metals. As is known in the art, the forming solution is held at elevated temperatures and pressures until the crystals are formed and thereafter the zeolite crystals are removed.

The novel process of this invention resides in using the exact forming solutions which have previously been taught for the preparation of zeolite ZSM-5 and adding therewith a buffering agent so as to have a final pH within the range of 9.73—10.5 to produce a rod-shaped crystal morphology which is desired.

The following examples will illustrate the novel process of this invention using various buffering agents. In all cases, collodial silica sol identified as Ludox® LS containing 30 weight percent silica was used for crystallizations. The molar ratio of silica to tetrapropylammonium bromide (TPABr) was held nearly constant at 19.8 to 19.9 and that of sodium hydroxide to TPABr was held constant at 3.05, percent crystallinity is based on X-ray comparison with a highly crystalline reference sample.

Generally, the reaction mixtures were prepared by dissolving tetrapropylammonium bromide, alkali hydroxide and a particular salt, water, and adding (Ludox) silica sol to this solution.

All crystallizations were carried out in non-stirred pressure vessels equipped with Teflon® liners and heated by immersion in a constant silicone oil bath.

Brief Description of the Figures

Figures 1a and 1b are scanning electron-micrographs of the product of Examples 3 and 4, respectively.

Figures 2a, 2b, and 2c are scanning electron-micrographs of the product of Examples 6, 7, and 8, respectively.

Figure 3 is a scanning electron-micrograph of the product of Example 10.

Figures 4a, 4b, and 4c are scanning electron-micrographs of the product of Examples 12, 13, and 14, respectively.

Figure 5 is a scanning electron-micrograph of the product of Example 15.

Figure 6 is a scanning electron-micrograph of the product of Example 16.

Figure 7 is a scanning electron-micrograph of the product of Example 17.

Figures 8a and 8b are scanning electron-micrographs of the products of Examples 19 and 20, respectively.

## Examples 1—4
Crystallization of high silica ZSM-5 in the presence of phosphate

As has been indicated previously, phosphate has been known to complex aluminum and its complexing and buffering properties cause crystallization of zeolites with higher silica-to-alumina ratios than obtained from a similar phosphate-free reaction medium.

The reaction mixture of Example 1 was prepared using 4.2 mols of $(NH_4)_2HPO_4$ per mol of tetrapropylammonium bromide (TPABr) in an attempt to complex alumina impurities and buffer the sodium hydroxide added. The amount of buffer added was equivalent to 0.42 equivalents of $HPO_4^=$ per eqivalent of silica. The amount of $(NH_4)_2HPO_4$ was lowered in Examples 2 and 3 to amounts ranging from 0.21 to 0.14 equivalents per mol of silica, respectively. Finally, ammonia was added in Example 4 to obtain an equimolar concentration of $(NH_4)_2HPO_4$ and $NH_3$. The equivalent amount of $HPO_4^=$ per mole of silica was 0.14. The reaction mixtures that crytallized completely had the highest pH, the products having practically identical sorption capacities as will be shown in Table 1.

## Examples 5—14
Crystallization of high silica ZSM-5 in the presence of tartrate, citrate and oxalate

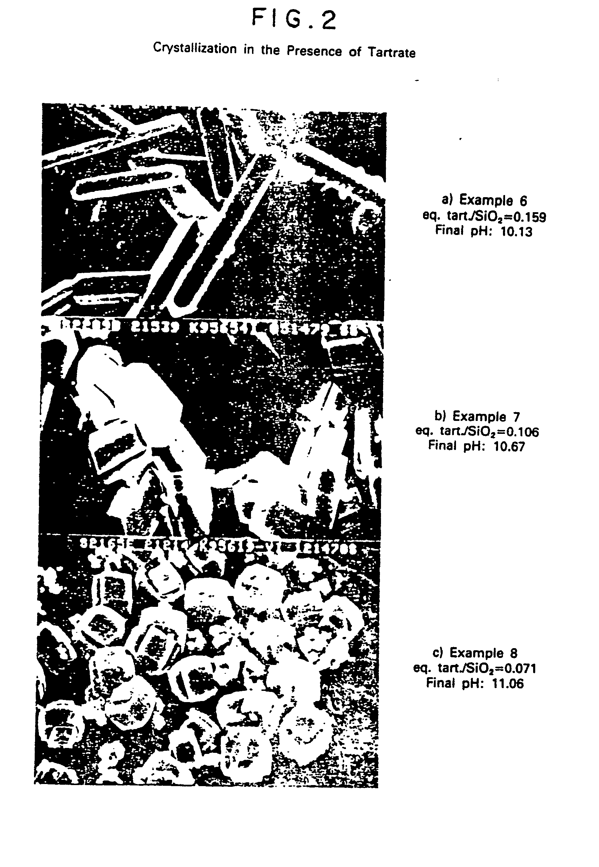

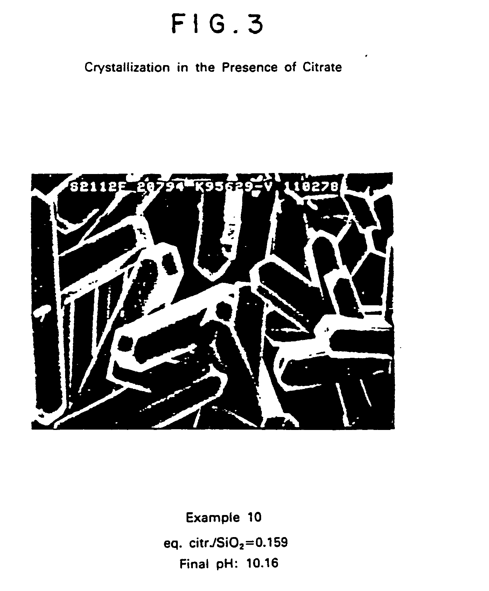

The reaction mixtures containing 2.1 mols of ammonium salts of tartaric, citric, and oxalic acid per mol

3

EP 0 093 519 B2

of TPABr crystallized incompletely or not at all (Examples 5, 9 and 11). This amount is equivalent to 0.21 equivalents of tartrate and oxalate (Examples 5 and 11) and 0.32 equivalents of citrate (Example 9) per mol of silica. Common to all three is very low pH of the final solution. When the amount of tartaric acid was reduced, the crystallinity of the products improved. Simultaneously, the crystals became less elongated (see Figure 2). When only half the amount of ammonium citrate was used (Example 10), citrate to TPABr equals 1.05, equivalents of citrate to moles of silica equals 0.16 which is similar to the reaction mixture of Example 6, and again, a good ZSM-5 was obtained. However, in the citrate mixture, both the citric acid and ammonia were decreased, thereby the pH for Figure 2b was higher than that for Figure 3.

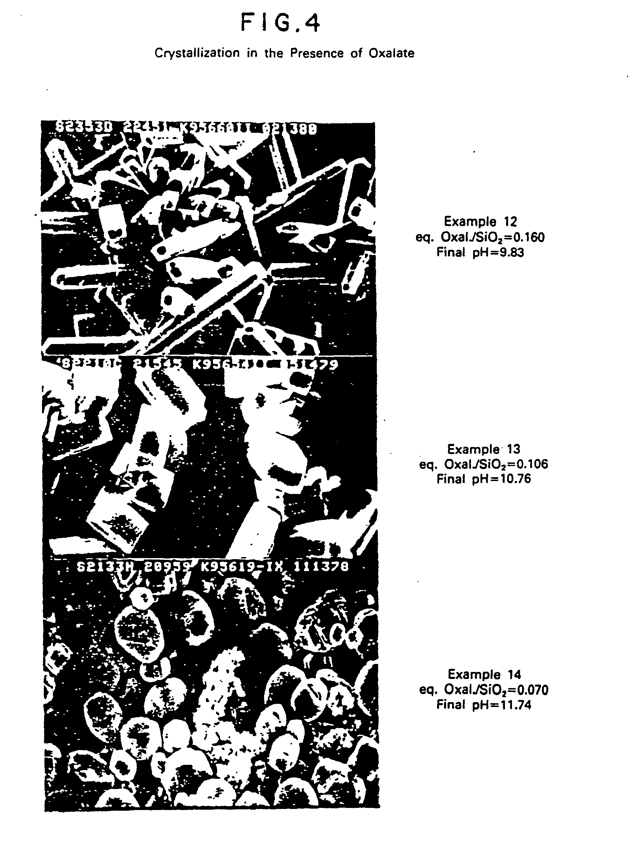

When the amount of ammonium oxalate was reduced (Examples 12—13), the resulting products were similar to those obtained with tartrate, i.e., see Table 2 and Figure 4. Sodium oxalate, instead of ammonium oxalate, was used in Example 14 resulting in a higher pH and more crystallization of quartz. Results are shown in Table 2.

Examples 15—17

Crystallization of high silica ZSM-5 in the presence of gluconate, salicylate and EDTA

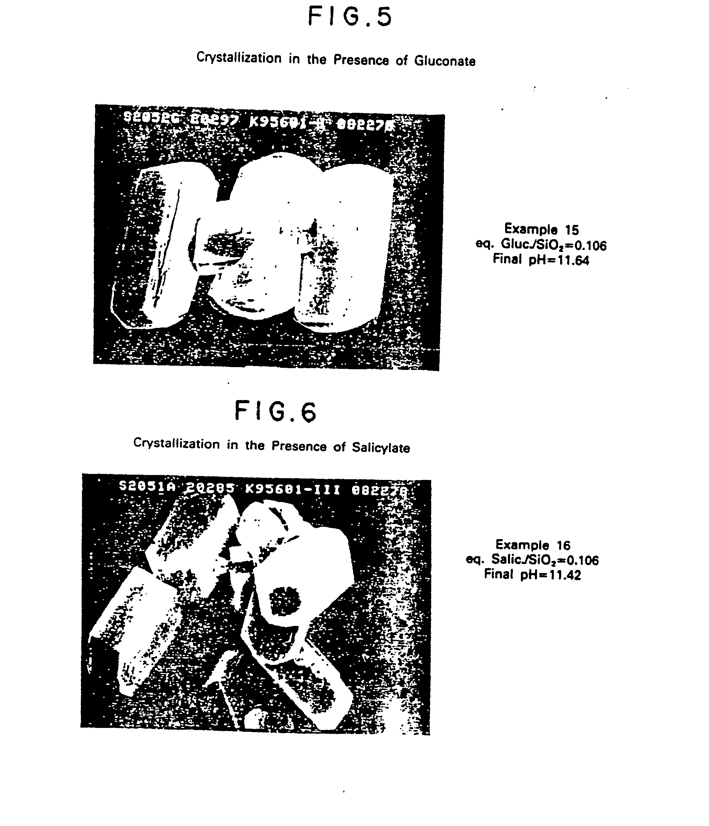

Reaction mixtures were prepared containing 2.1 moles of gluconate or salicylate per mol of TPABr which is equivalent to .105 equivalents of buffer per mol of silica, and these had pH values above 11 attributable to the weaker acids. The gluconate (Example 15) decomposed during crystallization, and the carbon formed was burned off by calcination at 550°C before analytical tests were carried out. The crystals obtained with gluconate are highly twinned (see Figure 5).

Less twinning is observed in the product of Example 16 obtained in the presence of salicylic acid (see Figure 6).

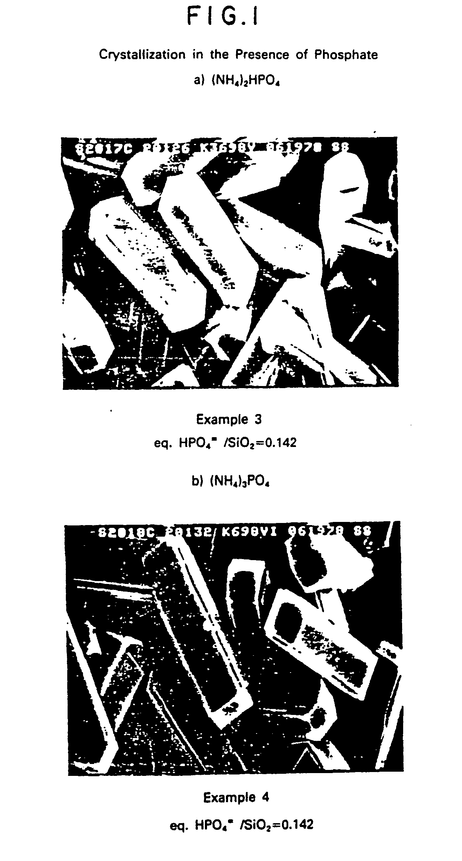

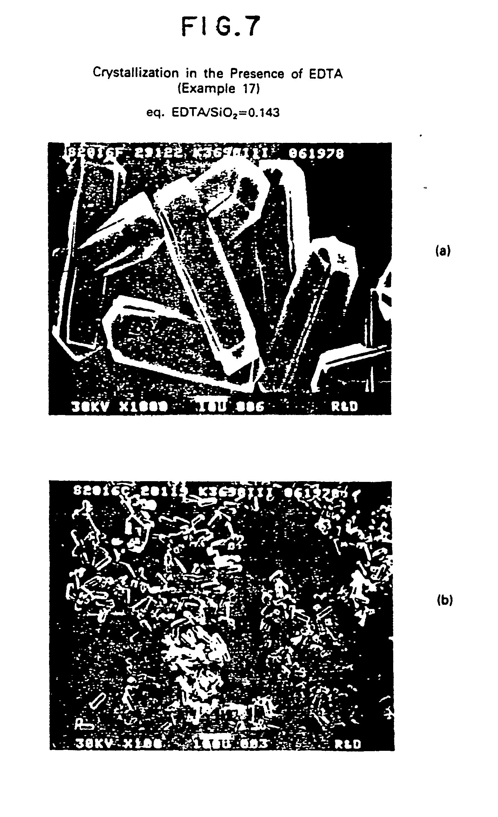

Crystals similar to those obtained when phosphate was present in the reaction mixtures, i.e., see Figure 1, crystallized in the presence of ethylenediaminetetraacetate (EDTA) (Figures 7a and b). Multiple twinning resulting in rudimentary spherulites can also be seen in Figure 7b. The material has a high crystallinity which is also evident from the high n-hexane and low cyclohexane sorption capacities. See Table 3.

Examples 18—21

Crystallization in the presence of acetate

Ammonium acetate was used in Examples 18—21. With 4.2 moles of acetate/mole of TPABr which is equivalent in .21 equivalents of buffer per mol of silica, the crystallization was still incomplete after 495 hours. With less ammonium acetate, 3.2 moles/mol of TPABr (0.16 equivalents per mol of $SiO_2$), somewhat more rapid crystallization was observed, although it was still incomplete after 163 hours (see Example 19). The scanning electron micrograph shows the same rod-shaped crystals as observed previously from low pH reaction mixtures, e.g., with tartrate (see Example 6, Figure 2a) and oxalate (Example 12, Figure 4a).

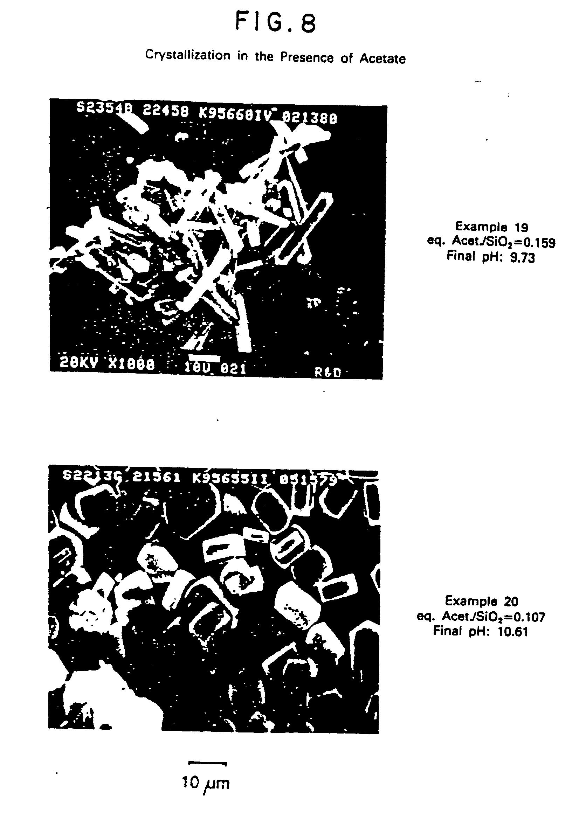

At 2.1 moles of ammonium acetate/mole of TPABr (.105 equivalents of ammonium acetate per mole of $SiO_2O$), a well crystallized product was obtained in 65 hours (Example 20). The ratio of width/length of these crystals is considerably increased, and some 90° twinning is observed (see Figure 8b). When the amount of NaOH was reduced (see Example 21), a material similar to that of Example 19 (Figure 8a) was obtained.

4

TABLE 1

| Example | 1* | 2* | 3 | 4 |
|---|---|---|---|---|
| Mol/mol of TPABr | | | | |
| $(NH_4)_2HPO_4$ | 4.2 | 2.1 | 1.4 | 1.4 |
| $NH_4OH$ | — | — | — | 1.4 |
| $H_2O$ | 275 | 275 | 275 | 275 |
| Initial pH | 9.5 | 9.9 | 10.5 | 10.7 |
| Crystallization | | | | |
| Time, Hrs. | 128 | 128 | 65 | 65 |
| Temp., °C | 200 | 200 | 200 | 200 |
| Final pH | 9.4 | 9.5 | 10.1 | N.A. |
| X-Ray | | | | |
| Identification | Amor. | ZSM-5 | ZSM-5 | ZSM-5 |
| Cryst. % | | 80 | 95 | 85 |
| Sorption, g/100 g | | | | |
| Cyclohexane, (2666 Pa) | | 1.3 | 0.6 | 0.6 |
| $n-C_6H_{14}$, (2666 Pa) | | 7.7 | 10.7 | 10.7 |
| $H_2O$, (1600 Pa) | | 1.2 | 1.4 | 1.5 |
| Composition of product | | | | |
| $SiO_2$, wt.% | | 89.3 | 86.6 | 87.1 |
| $Al_2O_3$, ppm | | 450 | 440 | 480 |
| Na, wt.% | | 0.02 | 0.08 | 0.08 |
| N, wt.% | | 0.73 | 0.89 | 0.82 |
| P, wt.% | | 0.003 | 0.01 | 0.01 |
| Ash, wt.% | | 91.1 | 88.8 | 88.9 |
| $SiO_2/Al_2O_3$ (molar) | | 3374 | 3346 | 3085 |
| SEM (scanning electromicropath) Fig. | | | 1a | 1b |

* Comparative example

TABLE 2

| Example | 5* | 6 | 7* | 8* | 9* | 10 | 11* | 12 | 13* | 14* |
|---|---|---|---|---|---|---|---|---|---|---|
| **Moles/Mole of TPABr** | | | | | | | | | | |
| Tartaric Acid | 2.1 | 1.58 | 1.05 | 0.7 | — | — | — | — | — | — |
| Citric Acid | — | — | — | — | 2.1 | 1.05 | — | — | — | — |
| $(NH_4)_2C_2O_4$ | — | — | — | — | — | — | 2.1 | 1.59 | 1.05 | — |
| $Na_2C_2O_4$ | — | — | — | — | — | — | — | — | — | 0.7 |
| $NH_4OH$ | 4.2 | 4.2 | 4.2 | 4.2 | 6.4 | 3.2 | — | — | — | — |
| $H_2O$ | 286 | 286 | 286 | 286 | 267 | 260 | 310 | 310 | 310 | 310 |
| Initial pH | 9.8 | 10.4 | 11.7 | 12.6 | 9.2 | 10.35 | 9.6 | 10.0 | 11.35 | 13.1 |
| **Crystallization** | | | | | | | | | | |
| Time, Hrs. | 168 | 166 | 67 | 91 | 72* | 92 | 211 | 165 | 66 | 71 |
| Temp., °C | 200 | 200 | 200 | 200 | 200 | 200 | 200 | 200 | 200 | 200 |
| Final pH | 8.7 | 10.13 | 10.67 | 11.06 | 9.38 | 10.16 | N.A. | 9.83 | 10.76 | 11.74 |
| **X-Ray** | | | | | | | | | | |
| Identification | Amor. | ZSM-5 | ZSM-5 | ZSM-5+ some Quartz | ZSM-5+ Amor. | ZSM-5 | Amor. +ZSM-5 | ZSM-5 | ZSM-5 | ZSM-5+ some Quartz |
| Cryst. % | | 115 | 135 | 145 | 55 | 110 | 35 | 95 | 135 | 100 |
| **Sorption, g/100 g** | | | | | | | | | | |
| Cyclohexane, (2666 Pa) | | 1.4 | 0.5 | 1.6 | 2.4 | 0.6 | | 1.5 | 0.4 | 2.6 |
| $n-C_6H_{14}$, (2666 Pa) | | 9.5 | 10.5 | 10.8 | 4.7 | 10.6 | | 8.9 | 10.9 | 11.2 |
| $H_2O$, (1600 Pa) | | 0.7 | 2.9 | 5.1 | 1.9 | 1.3 | | 0.7 | 2.8 | 6.4 |

* Followed by an additional heating at 180°C for 39 hours.

TABLE 2 (continued)

| Example | 5* | 6 | 7* | 8* | 9* | 10 | 11* | 12 | 13* | 14* |
|---|---|---|---|---|---|---|---|---|---|---|
| Composition of product | | | | | | | | | | |
| SiO$_2$, wt.% | | 86.5 | 84.4 | 86.1 | | 86.7 | | 87.0 | 83.5 | 85.9 |
| Al$_2$O$_3$, ppm | | 430 | 450 | 470 | | 460 | | 460 | 430 | 500 |
| Na, wt.% | | 0.03 | 0.35 | 0.59 | | 0.06 | | 0.02 | 0.33 | 0.84 |
| N, wt.% | | 0.82 | 0.87 | 0.78 | | 0.92 | | 0.79 | 0.85 | 0.76 |
| Ash, wt.% | | 89.1 | 88.1 | 88.7 | | 89.1 | | 89.9 | 87.9 | 86.9 |
| SiO$_2$/Al$_2$O$_3$ (molar) | | 3420 | 3188 | 3114 | | 3204 | | 3215 | 3301 | 2921 |
| SEM Fig. | | 2a | 2b | 2c | | 3 | | 4a | 4b | 4c |

TABLE 3

| Example | 15* | 16* | 17 |
|---|---|---|---|
| Moles/Mole of TPABr | | | |
| Gluconic Acid | 2.1 | | |
| Salicylic Acid | — | 2.1 | — |
| EDTA | — | — | 0.7 |
| $NH_4OH$ | 2.1 | 2.1 | 1.4 |
| $H_2O$ | 280 | 257 | 279 |
| Initial pH | 11.6 | 11.4 | 10.3 |
| Crystallization | | | |
| Time, Hrs. | 67 | 48 | 67 |
| Temp., °C | 200 | 200 | 200 |
| Final pH | 11.64 | 11.42 | 10 |
| X-Ray | | | |
| Identification | ZSM-5 | ZSM-5 | ZSM-5 |
| Cryst. % | 75 | 100 | 105 |
| Sorption, g/100 g | | | |
| Cyclohexane, (2666 pa) | 0.5 | 0.4 | 0.3 |
| $n-C_6H_{14}$, (2666 Pa) | 11.4 | 11.1 | 11.0 |
| $H_2O$, (1600 Pa) | 2.0 | 2.4 | 1.6 |
| Composition of product | | | |
| $SiO_2$, wt% | 96.7 | 86.8 | 86.8 |
| $Al_2O_3$, ppm | 490 | 760 | 580 |
| Na, wt.% | 0.24 | 0.34 | 0.10 |
| N, wt% | — | 0.81 | 0.69 |
| Ash, wt.% | 100** | 89.2 | 88.8 |
| $SiO_2/Al_2O_3$, molar | 3355 | 1942 | 2544 |
| SEM Fig. | 5 | 6 | 7 |

*Comparative examples
**Calcined form

TABLE 4
Exploratory crystallizations in the Presence of Anions Constants:
$SiO_2/TPABr$ = 19.9; Temperature = 200°C

| Example | 18* | 19 | 20* | 21 |
|---|---|---|---|---|
| Moles/Mole of TPABr | | | | |
| NH_4-Acetate | 4.2 | 3.2 | 2.1 | 2.2 |
| NaOH | 3.1 | 3.1 | 3.1 | 2.0 |
| $H_2O$ | 275 | 275 | 275 | 277 |
| Initial pH | 9.80 | 10.33 | 11.60 | 9.92 |
| Crystallization | | | | |
| Time Hrs. | 495 | 163 | 65 | 662 |
| Final pH | 8.78 | 9.75 | 10.61 | 9.73 |
| X-Ray | | | | |
| Cryst., %[1] | 90 | 95 | 140 | 100 |
| Sorption, g/100 g | | | | |
| Cyclohexane, (2666 Pa) | 0.7 | 2.4 | 0.6 | 3.1 |
| n-Hexane, (2666 Pa) | 8.4 | 9.4 | 10.7 | 9.7 |
| Water, (1600 Pa) | 0.2 | 0.8 | 2.8 | 0.2 |
| Composition of Product | | | | |
| $SiO_2$, wt.% | N.A. | 89.72[2] | 86.3 | 87.7 |
| $Al_2O_3$, ppm | N.A. | 430 | 445 | 460 |
| Na, wt.% | N.A. | 0.05 | 0.37 | 0.05 |
| N, wt.% | N.A. | 0.81 | 0.89 | 0.87 |
| Ash, wt.% | N.A. | 89.8 | 88.6 | 89.0 |
| $SiO_2/Al_2O_3$, molar | N.A. | 3546 | 3297 | 3241 |
| SEM, Fig. | — | 8a | 8b | — |

[1] All products were ZSM-5, no crystalline impurities were detected by x-ray diffraction
[2] By difference
* Comparative Examples

**Claim**

A process for producing rod-shaped high silica ZSM-5 having a silica-to-alumina ratio greater than 500, which process comprises;

A) forming a reaction mixture which is free of deliberately added aluminum and which contains a source of alkali metal oxide, a source of silica, a quaternary ammonium ion, water and a buffer which controls the pH of the reaction mixture to a value within the range of 9.73 to 10.5 and which is selected from phosphate, tartrate, citrate, oxalate, ethylenediaminetetraacetate, and acetate; and

B) holding said mixture at elevated temperature and pressure until said rod-shaped ZSM-5 crystals are formed.

**Patentanspruch**

Verfahren zur Herstellung eines stabförmigen ZSM-5 mit hohem Siliciumdioxidgehalt mit einem Siliciumdioxid/Aluminiumoxid-Molverhältnis von mehr als 500, wobei dieses Verfahren umfaßt:

A) Bildung einer Reaktionsmischung, die frei von vorsätzlich zugesetztem Aluminium ist, und die eine

# EP 0 093 519 B2

Alkalimetalloxid-Quelle, eine Siliciumdioxid-Quelle, ein quaternäres Ammoniumion, Wasser und einen Puffer enthält, der den pH-Endwert der Reaktionsmischung auf einen Wert im Bereich von 9,73 bis 10,5 regelt, und der aus Phosphat, Tartrat, Citrat, Oxalat, Ethylendiamintetraacetat und Acetat ausgewählt ist; und

B) Halten dieser Mischung bei erhöhter Temperatur und erhöhtem Druck, bis die stabförmigen ZSM-5-Kristalle gebildet sind.

**Revendication**

Un procédé de préparation de ZSM-5 à teneur élevée en silice et de type bâtonnet le rapport molaire silice/alumine est supérieur à 500, ledit procédé consistant:

A) à former un mélange réactionnel sans aluminium délibérément ajouté, et contenant une source d'oxyde de métal alcalin, une source de silice, un ion ammonium quaternaire, de l'eau et un tampon pour contrôler la valeur du pH final du mélange réactionnel dans une marge de 9,73 à 10,5 et qui soit choisi entre les phosphate, tartrate, citrate, oxalate, éthylènediaminetétraacétate et acétate; et

B) à maintenir ledit mélange à température et pression élevées jusqu'à formation desdits cristaux de type bâtonnet de ZSM-5.

10

# FIG.1

Crystallization in the Presence of Phosphate

a) $(NH_4)_2HPO_4$

Example 3

eq. $HPO_4^= /SiO_2 = 0.142$

b) $(NH_4)_3PO_4$

Example 4

eq. $HPO_4^= /SiO_2 = 0.142$

1

# FIG. 2

Crystallization in the Presence of Tartrate

a) Example 6
eq. tart./$SiO_2$=0.159
Final pH: 10.13

b) Example 7
eq. tart./$SiO_2$=0.106
Final pH: 10.67

c) Example 8
eq. tart./$SiO_2$=0.071
Final pH: 11.06

# F I G . 3

Crystallization in the Presence of Citrate

Example 10

eq. citr./$SiO_2$=0.159

Final pH: 10.16

# FIG.4

Crystallization in the Presence of Oxalate

Example 12
eq. Oxal./SiO$_2$=0.160
Final pH=9.83

Example 13
eq. Oxal./SiO$_2$=0.106
Final pH=10.76

Example 14
eq. Oxal./SiO$_2$=0.070
Final pH=11.74

4

# FIG.5

Crystallization in the Presence of Gluconate

Example 15
eq. Gluc./SiO$_2$=0.106
Final pH=11.64

# FIG.6

Crystallization in the Presence of Salicylate

Example 16
eq. Salic./SiO$_2$=0.106
Final pH=11.42

# FIG.7

Crystallization in the Presence of EDTA
(Example 17)

eq. $EDTA/SiO_2 = 0.143$

(a)

(b)

# FIG. 8

Crystallization in the Presence of Acetate

Example 19
eq. Acet./$SiO_2$=0.159
Final pH: 9.73

Example 20
eq. Acet./$SiO_2$=0.107
Final pH: 10.61

10 μm